Europäisches Patentamt

European Patent Office

Office européen des brevets

(11) Veröffentlichungsnummer: **0 326 036**
**A2**

## (12) EUROPÄISCHE PATENTANMELDUNG

(21) Anmeldenummer: 89100986.2

(22) Anmeldetag: 20.01.89

(51) Int. Cl.4: **B29B 17/00 , B29C 47/54 , B29C 47/68 , B29C 47/10**

(30) Priorität: 29.01.88 DE 3802719

(43) Veröffentlichungstag der Anmeldung:
02.08.89 Patentblatt 89/31

(84) Benannte Vertragsstaaten:
**AT BE CH DE ES FR GB GR IT LI LU NL SE**

(71) Anmelder: **Decker, Erich, jun.**
**Oberbernbacherweg 10**
**D-8890 Aichach(DE)**

(72) Erfinder: **Decker, Erich, jun.**
**Oberbernbacherweg 10**
**D-8890 Aichach(DE)**

(74) Vertreter: **Weickmann, Heinrich, Dipl.-Ing. et al**
**Patentanwälte H. Weickmann, Dr. K. Fincke F.A. Weickmann, B. Huber Dr. H. Liska, Dr. J. Prechtel Möhlstrasse 22 Postfach 860 820 D-8000 München 86(DE)**

(54) **Einrichtung zur Herstellung von Formkörpern aus thermoplastischem Werkstoff.**

(57) Eine Einrichtung zur Herstellung von Formkörpern aus thermoplastischem Werkstoff umfaßt einen Zylinder und in diesem Zylinder eine Mischwelle. Die Mischwelle ist von einem Ringkolben umgeben. Der Ringkolben ist axial verschiebbar und schiebt das thermoplastifizierte Material durch eine Ausfluß-stelle aus.

Fig.1

## Einrichtung zur Herstellung von Formkörpern aus thermoplastischem Werkstoff

Die Erfindung betrifft eine Einrichtung zur Herstellung von Formkörpern aus thermoplastischem Werkstoff, insbesondere thermoplastischem Abfallmaterial, umfassend eine zylindrische Durchflußkammer mit einer Materialbeschickungsstelle in einem ersten Endabschnitt und einer Ausflußstelle für thermoplastifiziertes Material in einem zweiten Endabschnitt, eine im wesentlichen konzentrisch innerhalb der zylindrischen Durchflußkammer angeordnete, mit einem Drehantrieb verbundene Mischwelle, welche zusammen mit der Durchflußkammer einen Ringraum definiert und Mischorgane innerhalb des Ringraums trägt, Beheizungsmittel zum Beheizen des jeweils in der Durchflußkammer enthaltenen Materials und Ausschubmittel zum portionsweisen Ausstoßen des thermoplastifizierten Materials durch die Ausflußstelle.

Bei bekannten Einrichtungen dieser Art ist die Mischwelle im wesentlichen auf ihrer ganzen Länge als Schneckenwelle ausgeführt, in Achsrichtung der Durchflußkammer hin- und herbeweglich und an ihrem der Ausflußöffnung zugekehrten Ende mit einem Rückschlagventil versehen. Im Bereich der Ausflußstelle ist eine Dosierkammer gebildet. Im Arbeitsbetrieb wird zunächst das Material unter Plastifizierung in Richtung auf die Dosierkammer gefördert, wobei sich die Schneckenwelle dreht und gleichzeitig in axialer Richtung von der Ausflußstelle zurückweicht. Dabei fließt das thermoplastifizierte Material über das Rückschlagventil hinweg in die Dosierkammer ein. Wenn die Dosierkammer gefüllt ist, bewegt sich die Schneckenwelle in Richtung auf die Ausflußstelle, wobei sich das Rückschlagventil schließt und die in der Dosierkammer enthaltene thermoplastifizierte Masse ausgeschoben wird. Diese bekannte Einrichtung und das vorstehend behandelte Betriebsverfahren dieser Einrichtung haben sich bewährt und in großem Umfang durchgesetzt. Es wird aber hier beanstandet, daß die bekannte Einrichtung insbesondere hinsichtlich des Rückschlagventils aufwendig und störungsanfällig ist. Die Störungsanfälligkeit des Rückschlagventils macht sich insbesondere dann bemerkbar, wenn das zu verarbeitende Material Verunreinigungen enthält, die zu einer Blockierung des Rückschlagventils führen können. Dann besteht insbesondere die Gefahr, daß das Rückschlagventil beim Ausschub der thermoplastifizierten Masse aus der Dosierkammer nicht mehr ordnungsgemäß schließt und somit thermoplastifizierte Masse über das Rückschlagventil zurückfließt. Völlig ungeeignet ist die bekannte Einrichtung dann, wenn es gilt, thermoplastifizierte Abfallmassen zu verarbeiten, die in großem Umfang als Industrieabfälle und als Haushaltsmüll anfallen und die zum einen wertvolle Rohstoffe darstellen und zum anderen aus Gründen des Umweltschutzes aufgearbeitet werden müssen.

Der Erfindung liegt die Aufgabe zugrunde, eine Einrichtung der eingangs bezeichneten Art zu ausbilden, daß sie aus einfachen und kostengünstigen Elementen aufgebaut werden kann und Betriebsstörungen weitgehend vermeidet.

Zur Lösung dieser Aufgabe wird erfindungsgemäß vorgeschlagen, daß der Ringraum einen in seiner Achsrichtung hin- und herbeweglichen ringkolben aufnimmt, welcher zum Nachfüllen der Durchflußkammer bis hinter die Materialbeschickungsstelle zurückziehbar ist und zum Ausstoßen des thermoplastifizierten Materials in Richtung auf die Ausflußstelle vorschiebbar ist.

Aus der DE-PS 841 057 ist eine Strangpresse zum Fördern plastischer Massen bekannt, bei welcher in einer zylindrischen Durchflußkammer zentrisch ein erster unverdrehbarer Kolben und in dem Ringraum zwischen dem ersten Kolben und dem Kammermantel ein ebenfalls unverdrehbarer Ringkolben angeordnet ist. Jedem der beiden Kolben ist ein hydraulischer Linearantrieb zugeordnet. Der erste Kolben arbeitet mit einem beweglichen Ventilring an seinem dem Ausfluß der Durchflußkammer zugekehrten Ende zusammen, welcher sich beim Vorschub des ersten Kolbens in Richtung auf den Ausfluß dichtend an das konische Ende des ersten Kolbens anlegt und beim Rückhub des ersten Kolbens von der Konusfläche des ersten Kolbens abhebt, jedoch durch Mitnahmeorgane des ersten Kolbens unter Ventilöffnung mitgenommen wird. Eine Beheizung ist nicht vorgesehen, da offensichtlich die zu verpressende Masse bereits im plastischen Zustand angeboten wird. Bei dieser bekannten Einrichtung treten die gleichen Probleme auf, die beim gattungsbildenden Stand der Technik als Folge des dortigen Rückschlagventils behandelt worden sind.

Aus der DE-PS 1 019 080 ist eine Spritzmaschine zur kontinuierlichen Bearbeitung von schmelzbaren bzw. in der Wärme plastisch verformbaren Kunststoffen behandelt. Dabei ist eine Misch- und Förderwelle in einer zylindrischen Durchflußkammer angeordnet. Diese Misch- und Förderwelle übernimmt allein den Vorschub der plastifizierten Masse in Richtung auf die Ausflußstelle. Ein mit dem Ringkolben des Erfindungsgegenstands vergleichbares Organ ist nicht vorhanden.

Es ist ohne weiteres einzusehen, daß bei der erfindungsgemäßen Lösung das konstruktiv besonders aufwendige und gegen Störungen besonders empfindliche Rückschlagventil durch einen leicht herstellbaren und störungsunempfindlichen Ringkolben ersetzt ist.

Die erfindungsgemäße Einrichtung ist zur Verarbeitung üblicher thermoplastischer Rohstoffe in Form von Granulat oder Schnitzeln geeignet. Darüberhinaus und insbesonderere ist die Einrichtung zur Aufarbeitung von Rohstoffen geeignet, die einen erheblichen Anteil von Verunreinigungen besitzen, da das empfindliche Rückschlagventil vermieden ist. Es hat sich gezeigt, daß mit der erfindungsgemäßen Einrichtung auch grobes Abfallmaterial verarbeitet werden kann, welches unschmelzbare Verunreinigungen, insbesondere Metallteile enthält. So ist es z. B. möglich, Joghurtbecherbecher zu verarbeitet, an denen noch Metallfoliendekkel haften, ohne daß Störungen zu erwarten sind.

Wenn eingangs der erfindungsgemäßen Einrichtung die Herstellung von "Formkörpern" zugeschrieben wird, so ist dabei zu beachten, daß der Begriff "Formkörper" in seiner allgemeinsten Bedeutung zu nehmen ist. Formkörper sind zum einen solche Körper, die aufgrund ihrer Form als Endprodukt anzusehen sind. Formkörper sind aber auch Zwischenprodukte in Strang- oder Schnitzelform, die ihrerseits zu Funktionsteilen weiterverarbeitet werden müssen.

Es empfiehlt sich, den Ringkolben jeweils nur soweit zurückzuziehen, daß er knapp hinter der Materialbeschickungsstelle steht, so daß die durch den Ringkörper zu durchfahrende Strecke insoweit ein Minimum erreicht.

Man kann die Mischwelle in einem ersten, der Materialbeschikkungsstelle benachbarten Bereich als Förderschnecke ausbilden und in einem daran zur Ausflußstelle hin anschließenden zweiten Bereich im wesentlichen glatt ausführen, wobei der Ringkolben dann zumindest in dem zweiten Bereich der Innenumfangsfläche der Durchflußkammer und der Außenumfangsfläche der Mischwelle unmittelbar anliegt oder mit allenfalls geringem Radialabstand. Bei dieser Ausführungsform kann die Förderschnecke für das durch die Beschickungsstelle eingefüllte Rohmaterial während ihrer grundsätzlich der Mischung dienenden Drehung auch eine Förderfunktion übernehmen und das frisch zugefüllte Rohmaterial in Richtung auf die Ausflußstelle fördern. Der Ringkolben wird dann in dem zweiten Bereich wirksam und schiebt das eingefüllte Rohmaterial in Richtung auf die Ausflußstelle, wobei das der Ausflußstelle anliegende Material soweit thermoplastifiziert ist, daß es als eine flüssige bis zähflüssige Masse durch die Ausflußstelle ausgeschoben wird. Die Mischorgane können auf der Mischwelle in einem an den zweiten Bereich zur Ausflußstelle hin anschließenden dritten Bereich angeordnet sein, der von dem Ringkolben nicht erreichbar ist. Auf diese Weise können beliebige Formen von Mischorganen eingesetzt werden, die im Hinblick auf die Mischfunktion optimiert sind und mit dem Ringkolben nicht in Kollision treten.

Ist im ersten Bereich eine Förderschnecke vorhanden, so kann man auch in dem ersten Bereich für eine möglichst enge Annäherung des Ringkolbens an die Förderschnecke und gleichzeitig für eine möglichst enge Anlage an der Innenumfangsfläche der Durchflußkammer sorgen. Damit erreicht man, daß die Ausschubwirkung des Ringkolbens bereits in dem ersten Bereich beginnt, bevor der Ringkolben den zweiten Bereich erreicht.

Die Beheizungsmittel werden unter Mitberücksichtigung der durch mechanische Arbeit erzeugten Wärme vorzugsweise derart angeordnet und bemessen, daß sich beim Ausschub thermoplastifizierten Materials aus der Ausflußstelle in Ausschubrichtung vor dem Ringkolben eine Packung von nicht vollständig thermoplastifiziertem Material als Trennschicht zu dem in Richtung auf die Ausflußstelle hin anschließenden vollständig thermoplastifizierten Material bildet. Diese Packung wird unter den zu erwartenden hohen Drücken hoch komprimiert und im wesentlichen dicht. Die Dichte des komprimierten Materials wird dabei unter Umständen noch dadurch weiter erhöht, daß die die Packung bildenden Teilchen oberflächlich bereits teilweise thermoplastifiziert sind. Diese Packung sorgt dann dafür, daß das vollständig thermoplastifizierte, flüssige bis zähflüssige Material nicht an die Dichtstellen zwischen Ringkolben einerseits und Durchflußzylinder sowie Mischwelle andererseits herantreten kann. Abdichtprobleme sind deshalb weitestgehend vermieden. Die Passung des Ringkolbens gegenüber den anliegenden Flächen der zylindrischen Durchflußkammer und der Mischwelle ist toleranzunempfindlich; eine dichte Anlage im Sinne von flüssigkeitsdicht braucht nicht gewährleistet zu sein. Selbstverständlich muß die Packung dann bis zum Ende des Ringkolbenvorschubs wenigstens teilweise erhalten bleiben.

Um beim beginnenden Vorschub des Ringkolbens, bevor dieser die Materialzuführungsstelle überfahren hat, ein Ausweichen des neu zugeführten Rohmaterials durch die Materialzuführungsstelle zu verhindern, empfiehlt es sich, daß die Materialbeschickungsstelle mit einer Beschickungsvorrichtung ausgeführt ist, welche das Material unter Druck in den ringraum einbringt. Diese Beschickungseinrichtung kann beispielsweise mit einem hin- und hergehenden Beschickungskolben ausgeführt sein, der jedenfalls dann Druck auf das im Ringraum enthaltene Material ausübt, wenn der Ringkolben seinen Vorschub beginnt.

Bei einer bevorzugten Ausführungsform der Beschickungseinrichtung ist vorgesehen, daß die Beschickungseinrichtung zwei diametral in Bezug auf die Mischwelle einander gegenüberliegende, in annähernd horizontaler Richtung bewegliche Beschickungskolben umfaßt, deren jeder mit einer der Mischwelle zugekehrten Teilzylinderfläche, insbesondere Halbzylinderfläche ausgestaltet und jeweils in einer Führung am Boden eines Beschickungsgehäuses verschiebbar geführt ist, wobei diese Beschickungskolben zwischen jeweils einer von der Mischwelle zurückgezogenen Aufnahmestellung und einer mischwellennahen Beschickungsstellung verschiebbar sind, in welch letzterer die Teilzylinderflächen einen Teil des Ringraumes bilden. Bei dieser Ausführungsform wird ein großes Beschickungsvolumen durch die beiden Kolben im Bereich der Mischwelle erfaßt und durch gegenseitige Annäherung der beiden Kolben zu einem Ringvolumen um die Mischwelle herum komprimiert. Dieses Ringvolumen wird dann beim nächsten Vorhub des Ringkolbens vorgeschoben.

Diese Ausführungsform kann im einzelnen so weitergebildet sein, daß das Beschickungsgehäuse beidseits der Mischwelle jeweils einem Beschickungskolben zugeordnet einen Beschickungsschacht aufweist, wobei die beiden Beschickungsschächte durch eine Trennwand voneinander getrennt sind.

Wenngleich diese Beschickungseinrichtung auch in Verbindung mit einer Förderschnecke auf der Mischwelle anwendbar ist, so muß es doch als ein besonderer Vorteil dieser Ausführungsform der Beschickungseinrichtung gelten, daß auf die Förderschnecke der Mischwelle auch verzichtet werden kann.

Ist die Mischwelle nicht mehr mit einer Förderschnecke versehen, so besteht die Möglichkeit, daß die Mischwelle während der Beschickung und während des Hin- und Hergangs des Ringkolbens kontinuierlich angetrieben ist. Es sei aber erwähnt, daß der kontinuierliche Antrieb grundsätzlich auch dann möglich ist, wenn auf der Mischwelle eine Förderschnecke angeordnet ist.

Vor der Ausflußstelle kann eine Ausflußkammer oder Dosierkammer gebildet sein. Das Volumen der pro Ausschubhub des Ringkolbens ausgestoßenen thermoplastifizierte Masse läßt sich durch die Bemessung dieser Kammer und durch die Bemessung der Hublänge des Ringkolbens einstellen. Damit ist eine Anpassung an eine gegebenenfalls nachgeschaltete Form entsprechend deren Formvolumen möglich. Eine angeschlossene Formeinrichtung kann eine Strangformeinrichtung sein, welche beispielsweise ein Profil als Endprodukt erzeugt. Es kann aber auch mit einer Strangformeinrichtung ein Zwischenproduktstrang erzielt werden, der wieder zerhackt werden kann, wobei die durch das Zerhacken gewonnenen Schnitzel in einem späteren Arbeitsgang weiterverarbeitet werden können.

Die von der Durchflußkammer bis zur Strangdüse oder Hohlform auftretenden Verengungsstellen müssen natürlich so bemessen werden, daß die Verunreinigungen auch diese Stellen passieren können, sofern man nicht eine Abtrennung der Verunreinigungen in Betracht zieht, worauf noch eingeangen werden wird. Im Bereich der Ausflußstelle kann auch eine Absperrvorrichtung vorgesehen sein. Eine solche Absperrvorrichtung kann ein von außen gesteuerter Ventilschieber sein, der keine Probleme während des Arbeitsbetriebs aufwirft, jedenfalls keine mit einem Rückschlagventil des Standes der Technik vergleichbaren Probleme. Ein solcher Ventilschieber kann jedesmal bei Beginn des Rückhubs des Ringkolbens geschlossen und bei Beginn des Vorschubs wieder geöffnet werden. Es ist aber auch möglich, bei Einrichtungen großer Leistung, die zur Beschickung von kleinvolumigen Formen führen, während eines einzigen Vorhubs die Absperrvorrichtung mehrmals zu schließen, um nacheinander verschiedene Formen im Anschluß an die erfindungsgemäße Einrichtung bringen und füllen zu können.

Die Erfindung löst auch in vorteilhafter Weise das Problem des Ausscheidens von Verunreinigungen aus der thermoplastifizierten Masse. "Verunreinigungen" ist dabei ganz allgemein zu verstehen. Es können dies unter anderem Metallteilchen oder höher schmelzende Kunststoffteilchen sein. Es sei aber darauf hingewiesen, daß die Abscheidung von Verunreinigungen nicht zwingend erforderlich ist.

Es ist auch denkbar, daß man an die erfindungsgemäße Einrichtung ohne Abscheidung von Verunreinigungen eine Form zur Herstellung von Formkörpern anschließt, wobei dann die Verunreinigungen in die Formkörper eingehen. Diese Möglichkeit gestattet ein besonders preisgünstiges Arbeiten und wird gewählt, wenn man Formkörper für untergeordnete Zwecke herstellen will, in denen Verunreinigungen weder von der Funktion noch von der mechanischen Festigkeit her störend wirken.

Die erfindungsgemäß weiter vorgeschlagenen Maßnahmen zur Abscheidung der Verunreinigungen sind insbesondere in Verbindung mit der soweit beschriebenen Einrichtung geeignet, sind aber auch in anderem Zusammenhang einsetzbar und sollen selbständigen Patentschutz genießen.

Voraussetzung für die erfindungsgemäße Einrichtung zur Abscheidung der Verunreinigungen ist wiederum eine Durchflußkammer mit einer Materialbeschickungsstelle und einer Ausflußstelle für das thermoplastifizierte Material, wobei wiederum Beheizungsmittel, Mischorgane und Ausschubmittel vorgesehen sind. Der Durchfluß durch die Durchflußkammer kann dabei schubweise oder kontinuierlich erfolgen.

Zur Abscheidung der Verunreinigungen ist vorgesehen, daß vor der Ausflußstelle ein Sieb angeordnet ist, daß vor dem Sieb ein Nebenabfluß für Grobbestandteile vorgesehen ist und daß an der stromoberseitigen Fläche des Siebs mindestens ein die Grobbestandteile in den Nebenabfluß fördernder Schaber angeordnet ist. Bei einer solchen Ausbildung tritt das thermoplastifizierte flüssige bis zähflüssige Material durch das Sieb hindurch, während die Verunreinigungen durch den Nebenabfluß abgeführt werden. Grundsätzlich könnte der Nebenabfluß durch ein Absperrventil absperrbar sein, so daß bei Auftreten des Ausschubdrucks in der Durchflußkammer das Absperrventil abgesperrt werden kann und damit kein unkontrollierter Abfluß von brauchbarer thermoplastifizierter Masse durch den Nebenabfluß eintritt. Es hat sich aber gezeigt, daß das durch den Nebenabfluß abfließende Grobgut eine Konsistenz besitzt, welche das Weglassen eines Absperrventils im engeren Sinne erlaubt, wenn man nämlich in dem Nebenabfluß eine Klemmstelle vorsieht, welche jeweils bei Auftreten eines Ausschubdrucks in der Durchflußkammer einen durch den Nebenabfluß abfließenden Strang von Grobbestandteilen klemmt. Durch den Nebenabfluß erhält man einen harten Strang, der beispielsweise bei der Verarbeitung von Joghurtbechern mit Metallfoliendeckel im wesentlichen aus Metallfolienschnitzeln besteht, die durch einen geringen Rest von thermoplastischer Masse aneinander gebunden sind. Dieses Strangmaterial kann entweder zur Rückgewinnung der Verunreinigungen, insbesondere des Metalls, weiterverarbeitet oder auch auf einer Müllhalde raumsparend gelagert werden. Um der Klemmstelle ein unbewegliches Festhalten des Grobmaterialstrangs zu gestatten, kann man vor der Klemmstelle eine Kühlstrecke an dem Nebenabfluß vorsehen, so daß dieser Strang an der Klemmstelle bereits hart ist.

Da sich die Verunreinigungen an der stromaufwärtigen Fläche des Sieb sammeln, empfiehlt es sich, daß der Schaber unmittelbar an dem Sieb entlangschabt und insbesondere, daß der Schaber in einer Führungsrinne der stromaufwärtigen Fläche des Siebs geführt ist, von welcher mindestens ein Teil der Sieböffnungen ausgeht.

Um das vor dem Schaber hergeschobene Abfallgut möglichst unmittelbar in dem Nebenabfluß zu fördern, empfiehlt es sich, daß der Schaber in Flucht mit dem Nebenabfluß geführt ist. Dabei wird eine besonders vollständige Abführung des Grobmaterials insbesondere dann erreicht, wenn der Schaber in Vollzug seiner Schaberbewegung in den Nebenabfluß eintaucht. Taucht der Schaber in den Nebenabfluß ein, so ist nicht auszuschließen, daß er auch größere Mengen brauchbaren Thermoplasts in den Nebenabfluß drängt, welcher durchaus auch durch das Sieb hindurchtreten könnte. Um diese Verluste möglichst gering zu halten, wird vorgeschlagen, daß an dem Schaber siebende Rückflußausnehmungen vorgesehen sind, welche beim Eintauchen des Schabers in den Nebenabfluß einen Rückfluß von thermoplastifizierter Begleitmasse der Grobbestandteile in Richtung zur Durchflußkammer gestatten. Durch diese Rückflußausnehmungen wird dann die thermoplastifizierte Begleitmasse zurückgedrängt, und zwar umso mehr, je höher der Ausschubwiderstand des durch den Nebenabfluß austretenden Strangs ist. Dieser Abflußwiderstand kann gegebenenfalls durch Regulierung der Klemmstelle eingestellt werden. Eine einfache Gestaltung für die Rückflußausnehmungen ergibt sich dadurch, daß diese von Nuten an dem in den Nebenabfluß eintauchenden Ende des Schabers gebildet sind.

Da eine Querdrift von Verunreinigungen über die stromaufwärtige Fläche des Siebs kaum zu erwarten ist, empfiehlt es sich, daß im wesentlichen sämtliche Durchflußöffnungen des Siebs durch den Schaber bestreichbar sind.

Aus Gründen einer einfacheren räumlichen Unterbringung kann es vorteilhaft sein, daß mehrere, vorzugsweise zwei, Schaber vorgesehen sind, wobei die Schaber bevorzugt längs zueinander paralleler Bewegungsbahnen geführt sind.

Das Vorhandensein von zwei oder mehr Schabern erlaubt auch eine besonders vorteilhafte Arbeitsweise, bei der die Schaber derart im Gegentakt geführt sind, daß beim Ausstoßen der thermoplastifizierten Masse jeweils ein Teil der Sieböffnungen frei ist. Dann kann man die Schaber unter Umständen ohne Abstimmung zur Vorschubbewegung in der Durchflußkammer bewegen, weil ja immer ein Teil der Sieböffnungen zur Verfügung steht. Ein solcher Aufbau ist deshalb insbesondere dann von Interesse, wenn eine kontinuierliche Reinigung gewünscht wird.

Eine bevorzugte Ausführungsform für die Form des Schabers ergibt sich dadurch, daß der Schaber von einer prismatischen oder zylindrischen Stange gebildet ist, welche in einer entsprechenden, mit dem Nebenabfluß fluchtenden Führung geführt ist. Bevorzugt ist diese Ausführung deshalb, weil bei ihr eine Rückwärtsmitnahme von Grobmaterial durch den Schaber ausgeschlossen ist, wenn sich der Schaber von dem Nebenabfluß zurückbewegt.

Um dem Problem einer ständigen Öffnung wenigstens eines Teils der Sieböffnungen Rechnung zu tragen, ist es auch möglich, daß die Stange an ihrem freien Ende einen in den Nebenabfluß eintauchenden Schaberkopf und rückwärts dieses Schaberkopfes einen verringerten Querschnitt aufweist. Bei dieser Ausführungs form ist allerdings eine Rückwärtsmitnahme der Grobverunreinigungen nicht ausgeschlossen, so daß die Verweilzeit der Grobvernreinigungen vor dem Sieb - im Durchschnitt gesehen - vergrößert wird.

Die beiliegenden Figuren erläutern die Erfindung anhand eines Ausführungsbeispiels. Es stellen dar:

Fig. 1 eine Gesamtansicht einer erfindungsgemäßen Einrichtung;

Fig. 2 einen Schnitt nach Linie II-II der Fig. 1;

Fig. 3 einen Schnitt nach Linie III-III der Fig. 1 und

Fig. 4 eine Vergrößerung in dem Bereich IV der Fig. 1.

Fig. 5 eine Teilabwandlung zu Fig. 1 und

Fig. 6 einen Schnitt nach Linie VI-VI der Fig. 5.

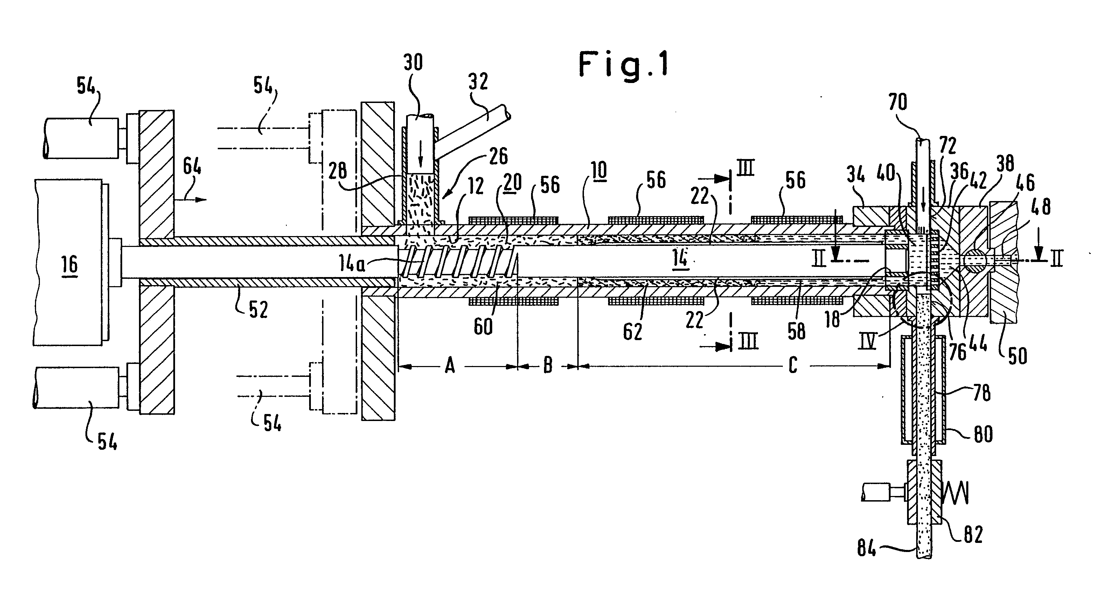

In Fig. 1 ist ein Zylinder mit 10 bezeichnet. Innerhalb dieses Zylinders ist eine Durchflußkammer 12 begrenzt. Konzentrisch innerhalb der Durchflußkammer 12 ist eine Mischwelle 14 angeordnet, die an ihrem in der Fig. 1 linken Ende durch einen Drehantrieb 16 angetrieben ist. An ihrem rechten Ende ist die Mischwelle 14 in einem Lagerring 18 gelagert, welcher seinerseits in dem Zylinder 10 durch eine Lochplatte oder ein Speichenkreuz (nicht eingezeichnet) festgehalten ist. Zwischen der Mischwelle 14 und dem Zylinder 10 ist ein Ringraum 20 eingeschlossen. Die Mischwelle ist in einem ersten Bereich A als Schneckenwelle 14a ausgebildet. In einem zweiten Bereich B ist die Mischwelle glatt.

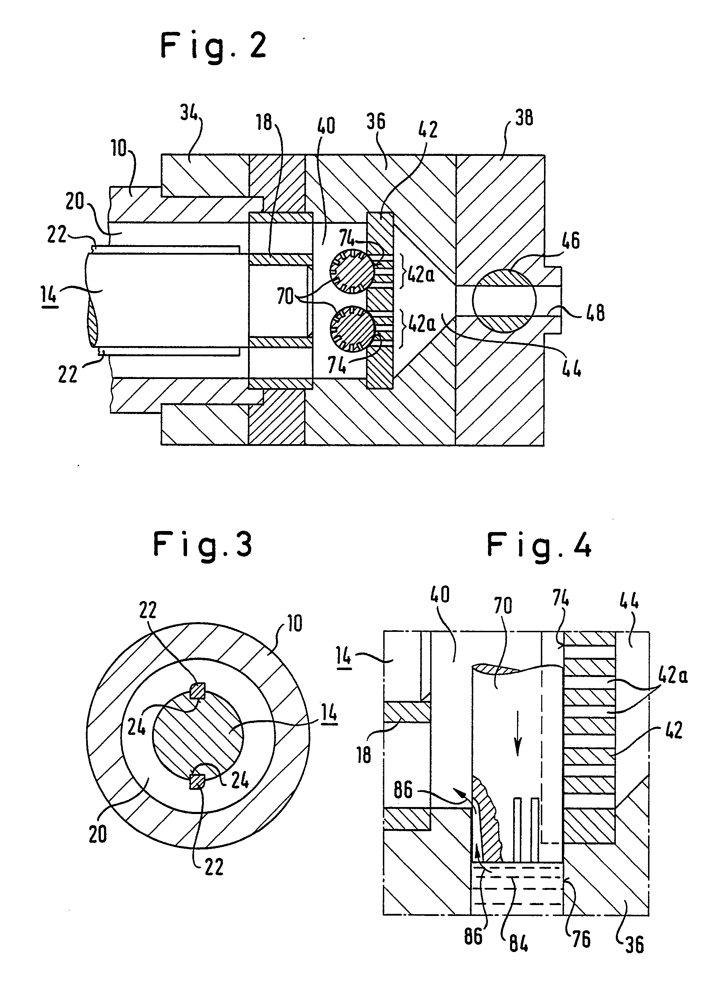

In einem dritten Bereich C ist die Mischwelle 14 mit Mischorganen 22 versehen, die - wie aus Fig. 3 zu ersehen - im Beispielsfall von Flossen gebildet sind, welche in Längsnuten 24 der Mischwelle 14 eingesetzt sind. Im Bereich A ist an dem Zylinder eine Materialbeschickungsstelle 26 angebracht. Diese umfaßt einen Beschickungszylinder 28 und einen in dem Beschickungszylinder geführten Beschickungskolben 30. An den Beschickungszylinder schließt sich ein Materialzuführungsrohr an.

Am rechten Ende des Zylinders 10 sind in Sandwich-Bauweise Blöcke oder Platten 34, 36 und 38 angeflanscht. Innerhalb der von diesen Blöcken oder Platten gebildeten Baugruppe ist eine Ausflußkammer 40 gebildet, welche durch ein Sieb 42 abgeschlossen ist. Auf der rechten Seite des Siebs ist eine Sammelkammer 44 in dem Block 36 gebildet, an welche sich ein Absperrventil 46 in dem Block 38 anschließt. Von der Sammelkammer 44 führt ein Kanal 48 über das Absperrventil 46 zu einer zweiteiligen Form 50. Die zweiteilige Form 50 ist von der Platte 38 lösbar bzw. dicht an diese Platte anpreßbar.

Die Mischwelle 14 ist von einem Ringkolben 52 umgeben, welcher durch Kraftgeräte 54 hin- und herverschiebbar ist. Der Zylinder 10 ist von ringförmigen Heizkörpern 56 umgeben.

Die soweit beschriebene Vorrichtung arbeitet wie folgt: Bei zurückgezogenem Ringkolben 52 und nach oben zurückgezogenem Beschickungskolben 30 wird Rohmaterial durch das Rohr 32 in den Beschickungszylinder 28 eingeführt. Der Beschickungskolben 30 schiebt das Rohmaterial nach unten nach. Die Förderschnecke 14a fördert das Rohmaterial in dem Ringraum 20 nach rechts durch die Bereiche A, B und C. Durch die Heizkörper 56 wird das Rohmaterial in Fortschreitrichtung nach rechts zunehmend plastifiziert. Durch die Mischorgane 22 wird das plastifizierte Rohmaterial in Fortschreitrichtung nach rechts zunehmend homogenisiert. Es bildet sich in dem durch horizontale Striche angedeuteten Teilbereich 58 eine Füllung von flüssigem bis zähflüssigem Material, welche auch die Ausflußkammer 40 füllt. In dem Teilbereich 60 ist das Rohmaterial noch in derjenigen Konsistenz vorhanden, in der es zugeführt wird. In dem Bereich 62 liegt eine Übergangskonsistenz vor. Das Rohmaterial ist bereits teilweise plastifiziert, insbesondere an der Oberfläche der Rohmaterialteilchen.

Wenn nun der Ringkolben 52 nach rechts in die strichpunktiert gezeichnete Lage, d. h. in Pfeilrichtung 64 vorgeschoben wird, so wird zunächst die Beschickungsstelle 26 verschlossen. Das Rohmaterial in dem Teilbereich 60 und insbesondere in dem Teilbereich 62 wird komprimiert. Das flüssige bis zähflüssige thermoplastische Material im Teilbereich 58 und in der Ausflußkammer 40 wird durch das Sieb 42 hindurchgepreßt und fließt über die Sammelkammer 44, das Absperrventil und den Kanal 48 in die Form 50 ein. Dann wird der Ringkolben 52 durch die Kraftgeräte 54 wieder zurückgezogen. Damit ist der Anlaufbetrieb beendet. Im stationären Betrieb enthält der Teilbereich 58, zumindest aber die Ausflußkammer 40 ständig thermoplastifiziertes Material. In dem Teilbereich 62 ist ständig dicht gepacktes, teilweise plastifiziertes Material vorhanden und im Teilbereich 60 befindet sich ständig ein Rest von nicht thermoplastifiziertem Rohmaterial. Nach jedem Rückhub des Ringkolbens 52 wird erneut Material durch die Beschickungsstelle 26 eingeführt und durch die Förderschnecke 14a nach rechts vorgeschoben. Danach beginnt wieder der Vorschub des Ringkolbens 52. Das in Vorschubrichtung vordere Ende des Ringkolbens 52 ist von dem voll thermoplastifizierten Material im Teilbereich 58 ständig durch eine Packung 62 von teilweise plastifiziertem Material getrennt, so daß die Dichtflächen zwischen der Mischwelle 14 in deren glattem Bereich B und dem Ringkolben 52 und auch die Dichtflächen zwischen dem Ringkolben 52 und dem Zylinder 10 für das voll thermoplastifizierte Material im wesentlichen unzugänglich sind. Vor jedem Vorschubhub wird auch im stationären Betrieb durch die Drehung der Mischwelle 14 eine innige Durchmischung herbeigeführt. Der Ringkolben 52 liegt auch an der Schnecke der Schneckenwelle 14a eng an, so daß vom Beginn des Vorschubs des Ringkolbens 52 an eine Mitnahmebewegung auf das Material übertragen wird, spätestens dann, wenn der Ringkolben 52 das durch die Schneckenwelle 14a nach rechts geförderte Material im Teilbereich 60 erreicht hat.

Wie aus Fig. 1, 2 und 4 ersichtlich, sind in dem Block 36 Schaber 70 geführt. Diese Schaber sind in Form von zylindrischen Stäben ausgeführt, welche durch jeweils eine Bohrung 72 in den Block 36 eingeführt sind und in die Kammer 40 eintauchen können. Die Schaber liegen mit einem Teil ihres Umfangs in Rinnen 74 der Siebplatte 42, von denen die Siebbohrungen 42a ausgehen. Wenn die Schaber 70 die in Fig. 1 gezeigte obere Stellung innerhalb der Durchflußkammer 40 einnehmen, so sind die Sieböffnungen 42a alle offen. In dem Block 36 sind ferner in Flucht mit den Schabern 70 Nebenabflußbohrungen 76 angeordnet.. An diese Nebenabflußbohrungen 76 schließen sich, wie aus Fig. 1 zu ersehen, Nebenabflußrohre 78 an. Die Nebenabflußrohre 78 sind von einem Kühlkörper 80 umgeben. An den Kühlkörper 80 schließt sich nach unten eine Klemmstelle 82 an. Wenn ein Schaber 70 nach unten geht, ausgehend von der Stellung der Fig. 1 in Richtung auf die Stellung gemäß Fig. 4, so werden die Verunreinigungen, die sich in der jeweiligen Rinne 74 angesammelt haben, von dem Schaber 70 nach unten in den Bereich der Nebenabflußbohrung 76 geschoben. Im stationären Zustand schließt sich an die Nebenabflußbohrung 76 bereits ein Strang 84 von Grobmaterial an, welcher durch die Klemmstelle 82 klemmbar ist. Die Abwärtsbewegung des Schabers 70 findet statt, während der Ringkolben 52 stillsteht, so daß in der Ausflußkammer 40 ein geringer Druck herrscht. Diesem Druck kann der Strang 84 unter der Wirkung der Klemmstelle 82, 84 jedenfalls so lange standhalten, bis der Schaber 70 -wie in Fig. 4 gezeigt - in die Nebenabflußbohrung 76 einge taucht ist. Dann wird der Strang 84 durch den Schaber 70 nach unten geschoben, wobei der Vorschubwiderstand durch entsprechende Einstellung der Klemmstelle 82 eingestellt werden kann. Bei diesem Vorschub des Strangs 84 strömt thermoplastifiziertes Material, welches in die Nebenabflußbohrung 76 gelangt ist, in Pfeilrichtung 86 zurück in die Ausflußkammer 40. Der Strang 84 hat deshalb einen sehr geringen Gehalt an brauchbarem thermoplastischem Material und besteht im wesentlichen nur aus Abfällen.

Da - wie in Fig. 2 dargestellt - zwei Schaber 70 vorhanden sind, können diese Schaber 70 im Gegentakt arbeiten, so daß unabhängig von dem Hubzyklus des Ringkolbens 52 ständig ein Teil der Abflußbohrungen 42a des Siebs 36 geöffnet ist und der Abfluß des thermoplastifizierten gereinigten Materials durch das Sieb 42 ständig gewährleistet ist. Da sich die Verunreinigungen unter der Wirkung der Strömung in der Ausflußkammer 40 vorwiegend in den Rinnen 74 ansammeln, ist eine ständige und vollständige Absonderung der Verunreinigungen gewährleistet. Da die Schaber 70 als Stäbe von gleichbleibendem Querschnitt ausgebildet sind, ist kein Aufwärtstransport von Verunreinigungen möglich.

Der Hub des Ringkolbens 52 kann so eingestellt werden, daß bei jedem Vorschubhub eine Form 50 gerade gefüllt wird. Es ist aber auch möglich, während des Vorschubhubs des Ringkolbens 52 den Ausfluß der thermoplastifizierten Masse durch den Kanal 48 mittels des Absperrventils 46 intermittierend abzusperren, so daß nacheinander während eines Vorschubhubs verschiedene Formen gefüllt werden können. Weiter ist es möglich, eine Form durch mehrere aufeinanderfolgende Vorschubhübe des Ringkolbens 52 zu füllen, dann nämlich, wenn die Leistung der Einrichtung im Verhältnis zum Formvolumen der Form 50 zu klein ist. Auch dann kann das Absperrventil 46 zwischen aufeinanderfolgenden Vorschubmitteln des Ringkolbens 52 abgesperrt werden.

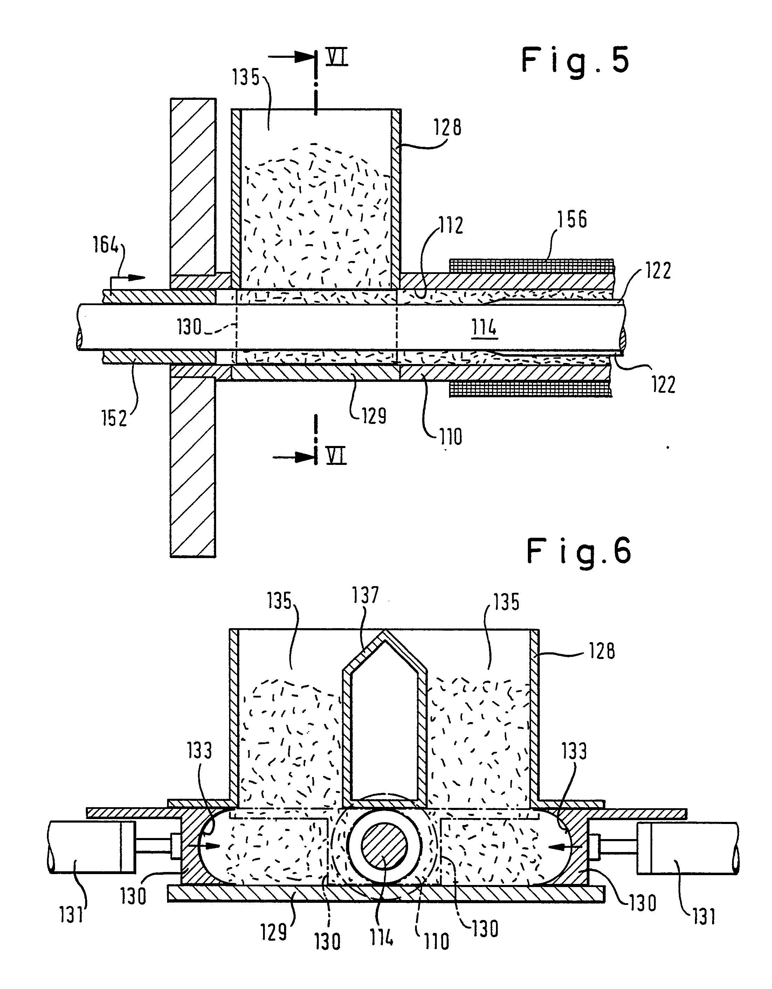

In den Figuren 5 und 6 ist eine Abwandlung des Beschickungsbereichs gegenüber Fig. 1 dargestellt. Analoge Teile sind mit gleichen Bezugszeichen versehen wie in Fig. 1, jeweils vermehrt um die Zahl 100. In dem Beschickungsgehäuse 128 sind im Bodenbereich 129 zwei Beschickungskolben 130 durch Kraftgeräte 131 gegenläufig geführt. Jeder der Beschickungskolben 130 ist mit einer Halbzylinderfläche 133 versehen. In dem Beschickungsgehäuse sind ferner zwei Beschickungsschächte 135 ausgebildet, die durch eine Trennwand 137 voneinander getrennt sind. Bei zurückgezogenem Beschikkungskolben 130 (Fig. 6 - ausgezogene Linien) fällt das zu verarbeitende Material aus den Beschickungsschächten 135 in die vergrößerten Zwischenräume zwischen den Halbzylinderflächen 133 und der Mischwelle 114. Danach gehen die Beschickungskolben 130 in die strichpunktiert eingezeichneten Positionen der Fig. 6 über, so daß die Halbzylinderflächen 133 dann einen geschlossenen Ringraum um die Mischwelle 114 bilden und damit die Durchflußkammer 112 glatt durchgehend ergänzen. In diesem Zustand führt der Ringkolben 152 seinen Vorhub aus und gibt das vorher zu einer Ringpackung komprimierte Material in den Bereich der Beheizung 156 und der Mischorgange 122. Eine Schneckenwelle ist dabei - wie gezeichnet - nicht mehr erforderlich, könnte aber immer noch vorhanden sein. Die Mischwelle 114 ist kontinuierlich angetrieben, auch während des Rückhubs des Ringkolbens 152. Wie bei der zuvor beschriebenen Ausführungsform bleibt auch hier zwischen dem thermoplastifizierten Material und dem rechten Ende des Ringkolbens 152 stets eine Packung von nicht vollständig thermoplastifiziertem Material, welche eine Dichtungsfunktion übernimmt. Im übrigen entspricht die Ausführungsform nach den Fig. 5 und 6 derjenigen nach den Fig. 1 bis 4.

**Ansprüche**

1. Einrichtung zur Herstellung von Formkörpern aus thermoplastischem Werkstoff, insbesondere thermoplastischem Abfallmaterial, umfassend eine zylindrische Durchflußkammer (12) mit einer Materialbeschickungsstelle (26) in einem ersten Endabschnitt und einer Ausflußstelle (48) für thermoplastifiziertes Material in einem zweiten Endabschnitt, eine im wesentlichen konzentrisch innerhalb der zylindrischen Durchflußkammer (12) angeordnete, mit einem Drehantrieb (16) verbundene Mischwelle, welche zusammen mit der Durchflußkammer (12) einen Ringraum (20) definiert und Mischorgange (22) innerhalb des Ringraums (20) trägt, Beheizungsmittel (56) zum Beheizen des jeweils in der Durchflußkammer (12) enthaltenen Materials und Ausschubmittel zum protionsweisen Ausstoßen des thermoplastizierten Materials durch die Ausflußstelle (48), dadurch gekennzeichnet, daß der Ringraum (20) einen in seiner Achsrichtung hin- und herbeweglichen Ringkolben (52) aufnimmt, welcher zum Nachfüllen der Durchflußkammer (12) bis hinter die Materialbeschickungsstelle (26) zurückziehbar ist und zum Ausstoßen des thermoplastifizierten Materials in Richtung auf die Ausflußstelle (48) vorschiebbar ist.

2. Einrichtung nach Anspruch 1, dadurch gekennzeichnet, daß der Ringkolben (52) bis knapp hinter die Materialbeschikkungsstelle (26) zurückziehbar ist.

3. Einrichtung nach Anspruch 1 oder 2, dadurch gekennzeichnet, daß die Mischwelle (14) in einem ersten, der Materialbeschickungsstelle (26) benachbarten Bereich (A) als Förderschnecke (14a) ausgebildet ist und in einem daran zur Ausflußstelle (48) hin anschließenden zweiten Bereich (B) im wesentlichen glatt ist, wobei der Ringkolben (52) zumindest in dem zweiten Bereich (B) der Innenumfangsfläche der Durchflußkammer (12) und der Außenumfangsfläche der Mischwelle (14) mit allenfalls geringem Radialabstand anliegt.

4. Einrichtung nach Anspruch 3, dadurch gekennzeichnet, daß die Mischorgange (22) auf der Mischwelle (14) in einem an den zweiten Bereich (B) zur Ausflußstelle (48) hin anschließenden dritten Bereich (C) angeordnet sind, der von dem Ringkolben (52) nicht erreichbar ist.

5. Einrichtung nach Anspruch 3 oder 4, dadurch gekennzeichnet, daß der Ringkolben (52) in dem ersten Bereich (A) an der Innenumfangsfläche der Durchflußkammer (12) und der Außenumfangsfläche der Förderschnecke (14a) mit allenfalls kleinem Radialabstand anliegt.

6. Einrichtung nach Anspruch 5, dadurch gekennzeichnet, daß die Beheizungsmittel (56) derart angeordnet und bemessen sind, daß sich beim Ausschub thermoplastischen Materials in Ausschubrichtung vor dem Ringkolben (52) eine Pakkung (62) von nicht vollständig thermoplastifiziertem Material als Trennschicht zu in Richtung auf die Ausflußstelle (48) hin anschließendem, vollständig thermoplastifiziertem Material (58) bildet und diese Packung (62) bis zum Ende des Ringkolbenvorschubs wenigstens zum Teil erhalten bleibt.

7. Einrichtung nach einem der Ansprüche 1 bis 6, dadurch gekennzeichnet, daß die Materialbeschickungsstelle (26) mit einer Beschickungsvorrichtung (28, 30) ausgeführt ist, welche das Material unter Druck in den Ringraum (20) einbringt.

8. Einrichtung nach Anspruch 7, dadurch gekennzeichnet, daß die Beschickungseinrichtung (28, 30) mit einem Beschickungekolben (30) ausgeführt ist.

9. Einrichtung nach einem der Ansprüche 7 und 8, dadurch gekennzeichnet, daß die Beschikkungseinrichtung zwei diametral in Bezug auf die Mischwelle (114) einander gegenüberliegende, in annähernd horizontaler Richtung bewegliche Beschickungskolben (130) umfaßt, deren jeder mit einer der Mischwelle (114) zugekehrten Teilzylinderfläche (133), insbesondere Halbzylinderfläche (133) ausgestaltet und jeweils in einer Führung (128) am Boden (129) eines Beschickungsgehäuses (128) verschiebbar geführt ist, wobei diese Beschikkungskolben (i30) zwischen jeweils einer von der Mischwelle (114) zurückgezogenen Aufnahmestellung (Fig. 6 - ausgezo gene Linien) und einer mischwellennahen Beschickungsstellung (Fig. 6 - strichpunktierte Linien) verschiebbar sind, in welch letzterer die Teilzylinderflächen (133) einen Teil des Ringraumes bilden.

10. Einrichtung nach Anspruch 9, dadurch gekennzeichnet, daß das Beschickungsgehäuse (128) beidseits der Mischwelle (114) jeweils einem Beschickungskolben (130) zugeordnet einen Beschikkungsschacht (135) aufweist, wobei die beiden Beschikkungsschächte (135) durch eine Trennwand (137) voneinander getrennt sind.

11. Einrichtung nach einem der Ansprüche 1, 2 und 7 bis 10, dadurch gekennzeichnet, daß die Mischwelle (114) im Bereich der Beschickungseinrichtung glatt und stromabwärts dieses Bereichs mit Mischorganen (122) an ihrem Umfang versehen ist.

12. Einrichtung nach einem der Ansprüche 1, 2 und 7 bis 11, dadurch gekennzeichnet, daß die Mischwelle (114) während der Beschickung und während des Hin- und Hergangs des Ringkolbens (152) kontinuierlich angetrieben ist.

13. Einrichtung nach einem der Ansprüche 1 bis 12, dadurch gekennzeichnet, daß vor der Ausflußstelle (48) eine Ausflußkammer (40) gebildet ist.

14. Einrichtung nach einem der Ansprüche 1 bis 13, dadurch gekennzeichnet, daß an die Ausflußstelle (48) eine Formeinrichtung anschließbar ist.

15. Einrichtung nach Anspruch 14, dadurch gekennzeichnet, daß die Formeinrichtung eine Strangformeinrichtung umfaßt.

16. Einrichtung nach Anspruch 14, dadurch gekennzeichnet, daß die Formeinrichtung (50) eine geschlossene Spritzgußform umfaßt.

17. Einrichtung nach einem der Ansprüche 1 bis 16, dadurch gekennzeichnet, daß im Bereich der Ausflußstelle (48) eine Absperrvorrichtung (46) vorgesehen ist.

18. Einrichtung nach einem der Ansprüche 1 bis 17, dadurch gekennzeichnet, daß die Mischwelle (14) axial unbeweglich in der zylindrischen Durchflußkammer (12) angeordnet ist.

19. Einrichtung nach einem der Ansprüche 1 bis 18, dadurch gekennzeichnet, daß die Mischwelle (14) an ihrem der Ausflußstelle (48) zugekehrten Ende durch eine Lochplatte, ein Speichenkreuz oder dgl. gelagert ist.

20. Einrichtung zur Herstellung von Formkörpern aus thermoplastischem Wekstoff, insbesondere nach einem der Ansprüche 1 bis 19, umfassend eine Durchflußkammer (12) mit einer Materialbeschickungsstelle (26) und einer Ausflußstelle (48) für das thermoplastifizierte Material, Beheizungsmittel (56), gegebenenfalls Mischorgange (22) und Ausschubmittel (52), dadurch gekennzeichnet, daß vor der Ausflußstelle (48) ein Sieb (42) angeordnet ist, daß vor dem Sieb (42) ein Nebenabfluß (76, 78) für Grobbestandteile (84) vorgesehen ist und daß an der stromoberseitigen Fläche des Siebs (42) mindestens ein die Grobbestandteile in den Nebenabfluß (76, 78) fördernder Schaber (70) angeordnet ist.

21. Einrichtung nach Anspruch 20, dadurch gekennzeichnet, daß in dem Nebenabfluß (76, 78) eine Klemmstelle (82) vorge sehen ist, welche jeweils bei Auftreten eines Ausschubdrucks in der Durchflußkammer (40) einen durch den Nebenabfluß (76, 78) abfließenden Strang (84) von Grobbestandteilen klemmt.

22. Einrichtung nach Anspruch 21, dadurch gekennzeichnet, daß vor der Klemmstelle (82) eine Kühlstrecke (80) an dem Nebenabfluß (76, 78) vorgesehen ist.

23. Einrichtung nach einem der Ansprüche 20 bis 12, dadurch gekennzeichnet, daß der Schaber (70) in einer Führungsrinne (74) der stromaufwärtigen Fläche des Siebs (42) geführt ist, von welcher mindestens ein Teil der Sieböffnungen (42a) ausgeht.

24. Einrichtung nach einem der Ansprüche 20 bis 23, dadurch gekennzeichnet, daß der Schaber (70) in Flucht mit dem Nebenabfluß (76, 78) geführt ist.

25. Einrichtung nach Anspruch 24, dadurch gekennzeichnet, daß der Schaber (70) in Vollzug seiner Schaberbewegung in den Nebenabfluß (76, 78) eintaucht.

26. Einrichtung nach Anspruch 25, dadurch gekennzeichnet, daß an dem Schaber (70) siebende Rückflußausnehmungen (86) vorgesehen sind, welche beim Eintauchen des Schabers (70) in den Nebenabfluß (76, 78) einen Rückfluß von thermoplastifizierter Begleitmasse der Grobbestandteile (84) in Richtung zur Durchflußkammer (12) gestatten.

27. Einrichtung nach Anspruch 26, dadurch gekennzeichnet, daß die siebenden Rückflußausnehmungen (86) von Nuten (86) an dem in den Nebenabfluß (76, 78) eintauchenden Ende des Schabers (70) gebildet sind.

28. Einrichtung nach einem der Ansprüche 20 bis 27, dadurch gekennzeichnet, daß im wesentlichen sämtliche Durchflußöffnungen (42a) des Siebs (42) durch den Schaber (70) bestreichbar sind.

29. Einrichtung nach einem der Ansprüche 20 bis 28, dadurch gekennzeichnet, daß mehrere, vorzugsweise zwei, Schaber (70) vorgesehen sind.

30. Einrichtung nach Anspruch 29, dadurch gekennzeichnet, daß die Schaber (70) längs zueinander paralleler Bewegungsbahnen (74) geführt sind.

31. Einrichtung nach Anspruch 29 oder 30, dadurch gekennzeichnet, daß die Schaber (70) derart im Gegentakt geführt sind, daß beim Ausstoßen der thermoplastifizierten Masse jeweils ein Teil der Sieböffnungen (42a) frei ist.

32. Einrichtung nach einem der Ansprüche 20 bis 31, dadurch gekennzeichnet, daß der Schaber (70) von einer prismatischen oder zylindrischen Stange (70) gebildet ist, welche in einer entsprechenden, mit dem Nebenabfluß (76, 78) fluchtenden Führung (72) geführt ist.

33. Einrichtung nach Anspruch 32, dadurch gekennzeichnet, daß die Stange an ihrem freien Ende einen in den Nebenabfluß eintauchenden Schaberkopf und rückwärts dieses Schaberkopfs einen verringerten Querschnitt aufweist.

# Fig.1

EP 0 326 036 A2

EP 0 326 036 A2

# Fig. 2

# Fig.3

# Fig. 4

Fig.5

Fig.6